# FASCICULE DE BREVET EUROPEEN

(11) **EP 3 358 078 B1**
(45) Date de publication et mention de la délivrance du brevet: **08.04.2020**
(21) Numéro de dépôt: 18154517.9
(22) Date de dépôt: 31.01.2018
(51) Int. Cl.: E01B 21/00, A01G 27/02, E01B 2/00

(54) **VOIE FERROVIAIRE VÉGÉTALISÉE À SOL RECONSTITUÉ**
BEGRÜNTES BAHNGLEIS MIT AUFGESCHÜTTETEM BODEN
VEGETALIZED RAILTRACK WITH SUBSTRATE

(30) Priorité: 03.02.2017 FR 1750949
(43) Date de publication de la demande: 08.08.2018
(73) Titulaire: ALSTOM Transport SA, 93400 St Ouen (FR); Sol Paysage SARL, 91400 Orsay (FR)
(72) Inventeur: MARIÉ, Xavier, 91400 Orsay (FR)
(74) Mandataire: Lavoix

(56) Documents cités:
- EP-A1- 0 475 489
- DE-A1- 19 609 159
- DE-U1- 29 706 920
- JP-A- 2009 268 393
- KR-A- 20110 108 501
- US-A1- 2006 029 472

## Description

L'invention a pour domaine celui des voies ferroviaires végétalisées pour la circulation de véhicules guidés, du type comportant un élément de support de voie ferrée, un sol reconstitué et un couvert végétal, l'élément de support de voie ferrée étant enfoui, au moins partiellement, dans le sol reconstitué et le couvert végétal recouvrant le sol reconstitué.

Par véhicule guidé ont entend tout véhicule du type train, métro, tramway, etc. bien que ce type de voies ferroviaires végétalisées, dites également voies « vertes », soit plus particulièrement mis en oeuvre pour des lignes de tramway en zone urbaine.

Il est connu de végétaliser une voie ferroviaire pour la circulation des tramways en recouvrant le sol entre les files de rails de la voie et/ou de part et d'autre de celles-ci d'un couvert végétal. Bien que des plantes rampantes, telles que du lierre, soient parfois utilisées, ce couvert végétal est en général constitué d'une pelouse, en particulier d'un gazon.

Cependant, on peut constater que, sur les voies existantes, ce couvert végétal est généralement de mauvaise qualité : l'enracinement du gazon est trop faible, il jaunit facilement et meurt quasiment systématiquement en cas d'arrêt de l'irrigation entrainant un jaunissement prolongé.

Le document DE 297 06 920 U1 décrit une voie ferroviaire végétalisée du type précité pour laquelle le sol reconstitué comporte : une couche de support sur la surface supérieure de laquelle repose l'élément de support de voie, la couche de support constituant une couche de drainage qui présente une perméabilité ; et au moins un substrat fertile en contact direct avec la couche de support autour de l'élément de support de voie ferrée.

Le document EP 0 475 489 A1 divulgue un sol végétalisé comportant une couche intermédiaire ayant une action de rétention d'eau.

L'invention a donc pour but de pallier au problème précité.

Pour cela l'invention a pour objet une voie ferroviaire végétalisée conforme aux revendications annexées.

Par une optimisation du nombre et de la nature des couches constitutives du sol reconstitué de la voie, une fertilité physique et une capacité de réserve utile en eau du sol reconstitué sont obtenues permettant au couvert végétal de rester vert et, en cas de stress hydrique momentané conduisant à un jaunissement, de ne pas mourir, mais de pouvoir reverdir par la suite.

L'invention et ses avantages seront mieux compris à la lecture de la description détaillée qui va suivre d'un mode de réalisation particulier, donné uniquement à titre d'exemple non limitatif, la description étant faite en se référant aux dessins annexés, sur lesquels :
- la figure 1 est une représentation schématique en perspective d'un élément de support de voie ;
- la figure 2 est une section transversale d'une voie ferroviaire végétalisée selon un mode de réalisation intégrant l'élément de support de voie de la figure 1 et présentant un sol reconstitué comprenant une couche de support et un substrat fertile, lui-même constitué d'une couche inférieure et d'une couche supérieure , cette dernière recevant un couvert végétal, en particulier un gazon ; et,
- la figure 3 est une section transversale d'une voie ferroviaire végétalisée selon un mode de réalisation intégrant l'élément de support de voie de la figure 1 et comportant un système de recirculation de l'eau de pluie tombant sur la voie, pour l'arrosage du couvert végétal.

Une voie ferroviaire végétalisée, telle que la voie 50 illustrée sur les figures, comporte deux files de rails implantées de manière à être affleurantes à la surface du sol. La voie comporte un ou plusieurs éléments de support de voie enterrés sous la surface du sol et sur lesquels sont fixés les rails. La voie comporte un sol reconstitué 40, fertile, autour ou le long des éléments de support de voie afin de remblayer, au moins partiellement, la tranchée pratiquée dans le sol pour recevoir la voie. La voie comporte enfin un couvert végétal constitue de végétaux semés ou plantés sur la couche superficielle du sol reconstitué.

### DESCRIPTION DU SUPPORT

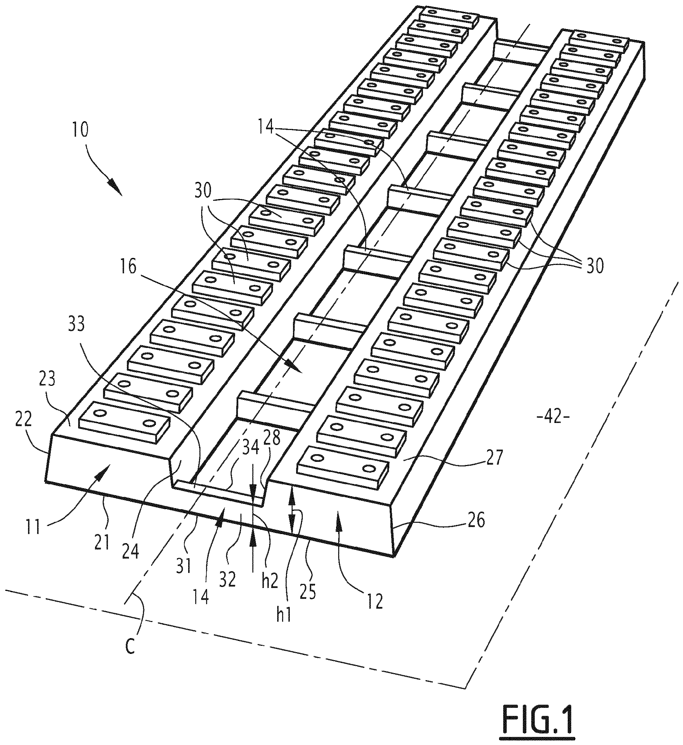

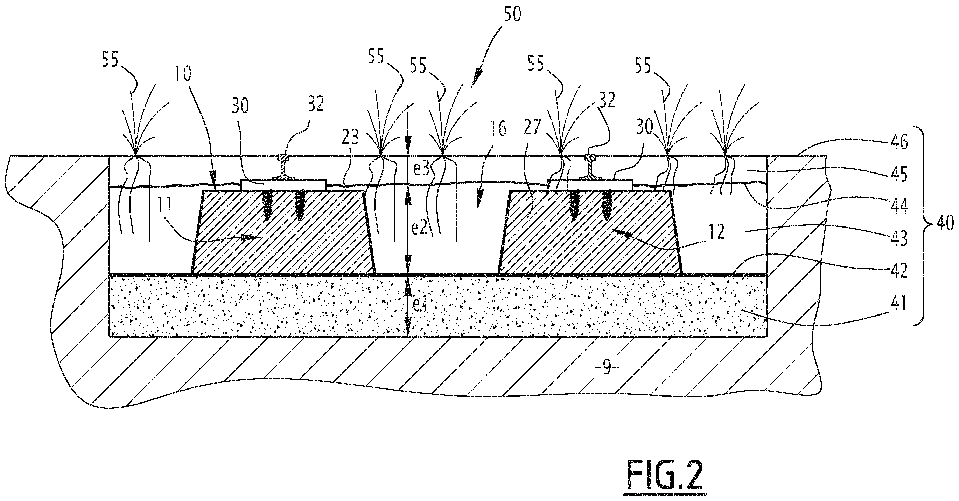

De préférence, l'élément de support de voie ferrée est du type de celui représenté sur les figures 1 et 2. Cependant, en variante d'autres types d'éléments de support de voie ferrée pourraient être utilisés.

L'élément de support de voie ferrée 10 comporte, de part et d'autre d'un tracé C de la voie ferrée végétalisée 50, une longrine gauche 11 et une longrine droite 12.

La longrine gauche 11 comporte une face inférieure 21, en contact d'une surface supérieure 42 d'une couche de support 41 du sol reconstitué 40, comme cela sera décrit en détail ci-après ; une face latérale extérieure 22 ; une face latérale intérieure 24 ; et une face supérieure 23.

De manière symétrique par rapport à un plan sensiblement vertical passant par la tracé C, la longrine droite 12 comporte une face inférieure 25 en contact avec la surface supérieure 42 de la couche de support 41 ; une face latérale extérieure 26 ; une face latérale intérieure 28 ; et une face supérieure 27.

Les longrines 11 et 12 présentent une première hauteur h1. Par exemple la première hauteur est entre 20 cm et 40 cm.

La face supérieure, 23, 27, de chacune des longrines, 11, 12, comporte une pluralité de selles 30. Une selle est une embase, plastique ou métallique, comportant des tiges d'ancrage scellées dans le béton des longrines. Des attaches 31 fixées sur l'embase permettent de maintenir en position un rail 32. Embases et attaches constituent un système de fixation de rail.

Une selle présente une épaisseur de quelques centimètres, par exemple 2 cm. Et un rail présente une hauteur standard de 15 cm par exemple.

L'élément de support de voie 10 comporte des jambages transversaux 14 de solidarisation des longrines droite et gauche, 11, 12, qui constituent des raidisseurs. Ils empêchent que les longrines droite et gauche ne s'écartent l'une de l'autre sous l'effet des efforts, notamment au passage des tramways, en particulier en courbe.

Les jambages transversaux 14 sont disposés à intervalles sensiblement réguliers, par exemple tous les 1,5 m en alignement droit et tous les 1,2 m en courbe.

Un jambage transversal 14 comporte une face inférieure 31 en contact de la surface supérieure 42 de la couche de support 41 ; une face latérale amont 32 ; une face latérale aval 34 ; et une face supérieure 33. Les qualificatifs d'amont et d'aval sont ici relatifs à un sens de référence pour la circulation des véhicules sur la voie.

Un jambage 14 présente une seconde hauteur h2 égale ou inférieure à la première hauteur h1. Dans le mode de réalisation représenté sur les figures, la seconde hauteur est inférieure à la première hauteur de sorte que, les faces inférieures des jambages et des longrines reposant dans le même plan, la face supérieure 33 des jambages 14 sont verticalement en retrait par rapport à la face supérieure 23, 27 des longrines 11, 12.

Transversalement entre les longrines droite et gauche, 11 et 12, et longitudinalement entre deux jambages 14 successifs, l'élément de support de voie 10 comporte un évidement 16 central et traversant.

Le support de voie 10 est ainsi du type comportant des longrines de part et d'autre d'un évidement central autorisant une continuité du sol reconstitué depuis la couche superficielle de réception du couvert végétal jusqu'à une couche profonde, telle qu'une couche de support de l'élément de support de voie ferrée, pouvant alors constituer une couche de drainage.

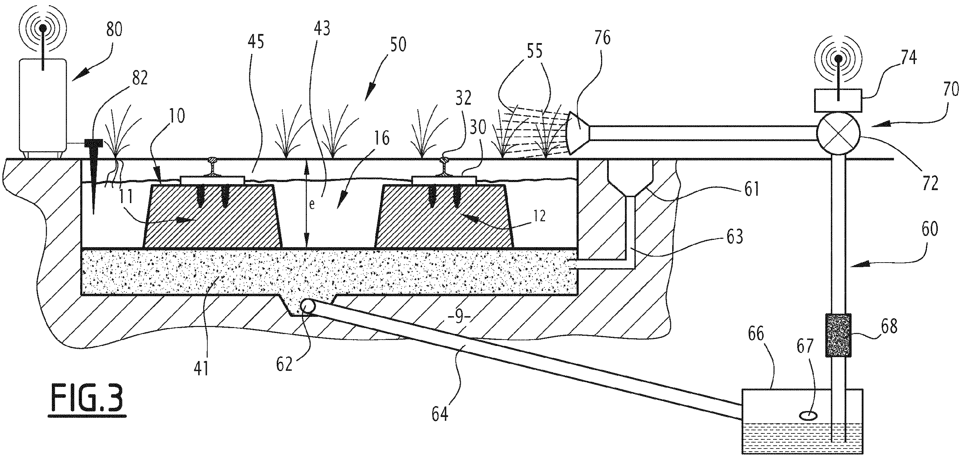

En variante comparativement à la figure 3, le sol reconstitué est positionné uniquement entre les longrines 11, 12.

### PREMIERE AMELIORATION SUR LA STRUCTURE EN COUCHES DU SOL RECONSTITUE

Le sol reconstitué est structuré de manière à présenter simultanément plusieurs fonctions.

Il doit permettre une circulation d'air et une circulation d'eau propice au développement du système racinaire des végétaux du couvert végétal.

Il doit présenter, en surface, une capacité d'infiltration d'eau importante pour limiter les effets de saturation et par conséquent de ruissellement à la surface de la voie.

Il doit présenter plus en profondeur une capacité de rétention d'un volume d'eau disponible optimisé pour les végétaux.

De préférence, il doit également présenter une capacité de drainage de l'eau de pluie qui tombe sur l'emprise de la voie.

En se référant au mode de réalisation illustré à la figure 2, le sol reconstitué 40 de la voie 50 est composé d'au moins trois couches, aussi dénommées « horizons », dont les caractéristiques d'épaisseur, de porosité, de perméabilité, de capacités de rétention en eau et en air sont spécifiquement déterminées en fonction du climat de la région où la voie est implantée et du type de végétaux constituant le couvert végétal 55, afin d'obtenir une fertilité physique propice à la croissance de ces végétaux et une disponibilité en eau propice à la résilience du couvert végétal en l'absence de dispositif d'irrigation ou en cas de dysfonctionnement de celui-ci.

Par porosité totale p, on entend le volume relatif des vides (ou pores) présents dans un matériau. Ce coefficient, sans dimension, est obtenu en soustrayant de l'unité, le rapport de la masse volumique apparente sèche sur la densité réelle du matériau. La porosité totale est la somme de la microporosité : les pores du matériau dont les dimensions caractéristiques sont de l'ordre de 1 µm à 100 µm) et de la macroporosité : les pores dont les dimensions caractéristiques sont de l'ordre de 0,1 mm à 10 mm.

La macroporosité est favorable à l'absorption et à la circulation des fluides (air et eau) dans le matériau.

La microporosité, par la mise en œuvre de forces capillaires s'opposant au déplacement de l'eau par gravité, est favorable à la rétention d'eau disponible pour la plante.

Par perméabilité K, on entend la conductivité hydraulique à saturation d'un matériau. Ce paramètre, exprimé en mm/h, correspond à la vitesse à laquelle un volume d'eau s'écoule à travers le matériau, saturé d'eau, sous l'effet de la gravité. Si un sol a une perméabilité élevée (coefficient supérieur à 10 mm/h), l'eau de pluie s'infiltre rapidement vers les couches plus profondes, alors que s'il présente une perméabilité réduite (coefficient inférieur à 2 mm/h), l'eau de pluie absorbée stagnera dans le sol de sorte que le sol ainsi engorgé sera rapidement saturé et que l'eau de pluie ne pourra plus être absorbée et ruissellera à la surface du sol.

Un sol pour lequel la macroporosité constitue la majeure partie de la porosité totale aura une perméabilité relativement élevée.

Par potentiel matriciel, ou potentiel hydrique matriciel, pF, on entend un coefficient sans dimension caractérisant la succion qu'il est nécessaire d'appliquer pour extraire de l'eau d'un matériau afin de vaincre les forces de capillarité dans les pores du matériau et d'absorption-adsorption de l'eau sur les particules du matériau.

Ceci est illustré par le sable d'une part et l'argile d'autre part : le sable, qui présente une porosité majoritairement du type macroscopique, n'adsorbe pas l'eau de sorte que l'eau présente, même en quantité faible, dans un échantillon de sable peut être extraite avec une succion réduite ; en revanche l'argile, qui présente une porosité majoritairement du type microscopique, adsorbe fortement l'eau, de sorte que l'eau présente dans un échantillon d'argile sera difficile à extraire. Un sol limoneux, à quantité d'eau égale, présente un potentiel matriciel intermédiaire entre celui du sable et celui de l'argile.

Le potentiel matriciel d'un matériau augmente quand sa teneur en eau diminue.

La transpiration des plantes extrait l'eau du sol. Cependant cette extraction n'est possible que jusqu'à une certaine valeur limite du potentiel matriciel, au-delà de laquelle la plante de peut pas vaincre les forces qui retiennent l'eau dans le sol et qui augmentent avec le départ de l'eau. Au-delà de cette valeur limite du potentiel matriciel, établie à pF égal à 4,2, la plante ne peut plus satisfaire ses besoins en eau et flétrit.

Ainsi à pF égal à 0, le sol est saturé d'eau ; à pF compris entre 2,5 et 3 (selon les caractéristiques granulométriques du sol reconstitué fertile), le sol est ressuyé, c'est-à-dire que l'eau qu'il contient n'est plus mise en mouvement par la gravité, la force de gravité étant alors contrebalancée par les forces de capillarité et d'absorption-adsorption ; à pF égal à 4,2, le sol est sec au point de flétrissement permanent des plantes.

Le sol est donc caractérisé par un volume d'eau disponible pour les plantes entre le point de ressuyage (pF compris entre 2,5 et 3) et le point de flétrissement permanent (pF égal à 4,2).

Dans le mode de réalisation de la figure 2, le sol reconstitué 40 comporte, superposées les unes au-dessus des autre, une couche de support 41, une couche inférieure 43 et une couche supérieure 45.

La couche supérieure 45 est recouverte par les végétaux semés ou plantés du couvert végétal 55.

L'élément de support de voie 10 est posé sur la couche de support 41, qui est préalablement recouverte d'un film de protection.

Les couches inférieure 43 et supérieure 45 forment ensemble un substrat fertile au-dessus de la couche de support 41 et, avantageusement, de part et d'autre et au-dessus de l'élément de support de voie 10.

L'élément de support de voie 10 étant ajouré, le substrat fertile vient directement en contact de la couche de support dans la partie axiale de la voie. Le sol reconstitué présente donc une continuité permettant l'infiltration de l'eau de pluie depuis la couche supérieure 45 vers la couche de support 41 à travers la couche inférieure 43.

Avantageusement, la couche de support 41 constitue une couche drainante pour le drainage de la voie.

En variante, le sol reconstitué comporte plusieurs couches de drainage successives.

La couche de support 41 s'étend sur une première épaisseur e1 entre le fond sensiblement horizontal de la tranchée pratiquée dans le sol 9, et une surface supérieure 42 sensiblement horizontale.

Le support 10 reposant sur la couche de support 41, le matériau constitutif de la couche de support 41 doit présenter des caractéristiques mécaniques. Adaptées.

La couche de support 41 devant avantageusement drainer la voie et constituer un réservoir pour respecter, le cas échéant, les engagements de débit de fuites maximales autorisées au réseau de collecte des eaux pluviales de l'infrastructure dans lequel s'intègre la voie ferroviaire, elle présente des caractéristiques hydrodynamiques (porosité et perméabilité) adaptées, notamment à l'intensité maximale de la pluie dans la région d'implantation de la voie.

La couche de support 41 présente une première porosité totale p1.

La couche de support 41 présente une première perméabilité K1.

La couche de support 41 est drainante. Elle présente donc une porosité totale p1 élevée, avantageusement du type macroporosité, et une perméabilité K1 élevée.

Le film de protection à l'interface entre la couche 41 et le support 10 ou la couche inférieure 43 permet d'éviter l'encrassement des pores de la couche de support 41. Ce film est par exemple fait d'un textile adapté.

La couche inférieure 43 s'étend sur une seconde épaisseur e2 entre la surface supérieure 42 de la couche de support 41 et une surface supérieure 44 sensiblement horizontale.

La couche inférieure 43 présente une seconde porosité p2.

La couche inférieure 43 présente une seconde perméabilité K2.

La couche inférieure 43 présente une seconde capacité d'aération ca2 et une seconde capacité de disponibilité en eau ce2.

La couche supérieure 45 s'étend sur une troisième épaisseur e3 entre la surface supérieure 44 de la couche inférieure 43 et une surface supérieure 46 sensiblement horizontale et affleurant à la surface du sol 9.

La couche supérieure 45 présente une troisième porosité p3.

La couche supérieure 45 présente une troisième perméabilité K3.

La couche supérieure 45 présente une troisième capacité d'aération ca3 et une troisième capacité de disponibilité en eau ce3.

Les matériaux constitutifs de chaque couche sont sélectionnés en fonction de leurs propriétés relatives de manière à respecter des contraintes adaptées à la fertilité du couvert végétal :
En ce qui concerne les épaisseurs, la troisième épaisseur e3 de la couche supérieure 45 varie entre 20 et 80 % de l'épaisseur du substrat fertile, qui est égale à la somme des seconde et troisième épaisseurs, mais aussi à la hauteur de l'élément 10 augmentée de la hauteur des platines 31 et des rails 32.

La troisième épaisseur e3 de la couche supérieure 45 de substrat fertile est de préférence comprise entre 3 et 20 cm ; la seconde épaisseur e2 de la couche inférieure 43 de substrat fertile est de préférence comprise entre 10 et 40 cm, de préférence encore entre 20 et 30 cm.

La première épaisseur e1 de la couche de support 41 peut être choisie indépendamment des seconde et troisième épaisseurs. La première épaisseur e1 vaut par exemple entre 10 et 80 cm en fonction d'un compromis entre la résistance mécanique que doit apporter la couche de support 41, l'efficacité du drainage, la capacité de constituer un réservoir pour satisfaire le cas échéant au débit de fuite limité sur le réseau d'eau pluviale de l'infrastructure, les caractéristiques du sol in-situ et la possibilité de décaisser le sol à l'endroit d'implantation de la voie compte tenu des réseaux enterrés existants.

En ce qui concerne les porosités, la troisième porosité p3 de la couche supérieure 45 est supérieure à 50%. De préférence, la troisième porosité p3 est majoritairement du type porosité macroscopique. La couche supérieure 45 doit favoriser la pénétration de l'eau de pluie dans les couches plus profondes du sol reconstitué 40, et pouvoir accepter un volume d'eau important avant saturation pour limiter le ruissellement à la surface de la voie 50.

La seconde porosité p2 de la couche inférieure 43 est comprise entre 35% et 70%. Préférablement, cette seconde porosité est majoritairement du type porosité microscopique, de manière à stocker un volume d'eau utile pour constituer une réserve d'eau accessible aux plantes par l'absorption de leurs racines.

La première porosité p1 est de préférence supérieure à 30 % et est de préférence du type macroporosité pour que la couche de support 41 remplisse sa fonction de couche de drainage pour amener l'eau de pluie d'infiltration vers un circuit de collecte comme cela sera décrit plus bas.

En ce qui concerne les perméabilités, la troisième perméabilité K3 est égale à une perméabilité de surface. Celle-ci est supérieure à la seconde perméabilité K2 (K3>K2) pour que l'eau captée par la couche supérieure 45 puisse s'infiltrer rapidement vers la couche inférieure 43 où elle sera préférentiellement retenue.

La première perméabilité K1 est supérieure à la perméabilité de surface : K3 (K1>K3). Ceci afin que la couche de support 41 draine efficacement l'eau absorbée par le substrat fertile, en particulier par la couche supérieure 45.

La perméabilité de surface K3 est de préférence égale ou supérieure à l'intensité de pluie de référence dans la région d'implantation de la voie 50, par exemple égale à 10⁻⁵ m/s (36 mm/h) en Europe. Ceci afin de conduire rapidement vers les couches plus profondes le volume d'eau de pluie absorbé par la couche supérieure 45 et ainsi retarder l'instant où cette couche sera saturée et où l'eau de pluie commencera à ruisseler sur la surface de la voie 50.

Le coefficient K2 est par exemple compris entre 5.10⁻³m/s et 10⁻¹⁰m/s, de préférence entre 5.10⁻⁵m/s et 10⁻⁷M/S.

Le coefficient K1 est par exemple supérieur 10⁻¹ m/s, de préférence supérieur à 10⁻⁵ m/s, de préférence égal à 10⁻⁴ m/s.

En ce qui concerne les capacités d'aération et de disponibilité en eau, la couche supérieure 45 se caractérise par une capacité de disponibilité en eau ce3 supérieure ou égale à 5 % de son volume, entre pF égal à 2,5 ou 3 et pF égal à 4,2.

La capacité d'aération ca3 de la couche supérieure 45 entre pF égal à 0 et pF égal à 2,5 est égale ou supérieure à 10% de son volume, de préférence supérieure à 20%.

La capacité de disponibilité en eau ce2 de la couche inférieure 43 entre pF égal à 2,5 ou 3 et pF égal à 4,2 (c'est-à-dire le volume d'eau disponible pour la plante) est supérieure à 5% de son volume, de préférence supérieure à 10%, par exemple égale à 15% ou 20%. La couche inférieure 43 constitue ainsi une réserve d'eau pour le couvert végétal.

La capacité d'aération ca2 de la couche inférieure 43 entre pF égal à 0 et pF égal à 2 est égale ou supérieure à 5% de son volume, de préférence supérieure à 10%.

Le choix d'une capacité d'aération et d'une capacité de disponibilité en eau élevées, pour la couche supérieure et la couche inférieure du substrat fertile, permettent le développement, à travers l'épaisseur du substrat fertile, d'un réseau racinaire homogène et de qualité pour les végétaux du couvert végétal.

La couche de support 41 est constituée d'un matériau minéral, intégrant ou non des liants hydrauliques. Il s'agit de préférence d'une base granulaire ou d'un béton poreux. Elle constitue la couche drainante et mécaniquement portante du sol reconstitué.

La couche supérieure 45 et la couche inférieure 43 ont une constitution minérale ou, de préférence, organo-minérale. Dans ce dernier cas, elles sont composées d'une terre limoneuse (afin que l'eau retenue soit essentiellement disponible à la plante). La couche supérieure 45 est plus riche en humus et/ou en sable que la couche inférieure.

Ainsi, le sol reconstitué présente une structure en au moins trois couches de fonctions et de compositions complémentaires pour participer au cycle de l'eau et à la fertilité physique du sol.

Le substrat fertile pourrait présenter plus de deux couches à condition de respecter un gradient de perméabilité tel que la perméabilité diminue en fonction de la profondeur à partir d'une perméabilité de surface. Le substrat fertile présente une capacité de disponibilité en eau entre pF égal à 2,5 ou 3 et pF égal à 4,2 qui augmente en fonction de la profondeur. De préférence, le substrat fertile présente également un rapport entre une porosité macroscopique et une porosité microscopique qui diminue avec la profondeur.

Au fil du temps, la fertilité physique du sol reconstitué se traduit par un équilibre tel que la voie ferroviaire végétalisée présente également des fertilités chimique et biologique naturelles, propices au développement du couvert végétal.

### SECONDE AMELIORATION SUR LE RECYCLAGE DE L'EAU DE PLUIE

Le surplus d'eau de pluie qui ne peut être gardé dans le tampon que constitue le sol reconstitué 40 est collecté le long de la voie 50 et est réutilisé pour arroser le couvert végétal 55.

Pour cela un système 60 de recirculation de l'eau de pluie équipe la voie ferroviaire végétalisée 50.

Dans le mode de réalisation de la figure 3, ce système 60 comporte un dispositif de collecte de l'eau de pluie qui comporte un circuit de drainage et un circuit d'écoulement.

Le circuit de drainage est placé sous la couche de support 41 constituant la couche de drainage du sol reconstitué. Par exemple, ce circuit comporte un ensemble exutoire comportant une canalisation de drainage 62 longitudinale, placée dans un sillon central à pans inclinés formant le fond de la tranchée de réception de la voie 50.

Avantageusement, le circuit de drainage est placé sous la couche de support 41, à l'aplomb de la voie 50. En variante le circuit de drainage est placé latéralement sur les côtés de la voie 50, sous la couche de support 41. La canalisation de drainage 62 est par exemple cylindrique et comporte, du côté supérieure, orienté vers et en contact de la couche de support 41, des micro-perforations permettant à l'eau drainée par la couche de support 41 d'être collectée à l'intérieur de la canalisation 62. La canalisation 62 est par exemple entourée d'un géotextile.

L'ensemble exutoire comporte des piquages latéraux 64, régulièrement prévus le long de la canalisation 62, pour amener l'eau collectée par la canalisation de drainage 62 vers des réservoirs de récupération 66.

Les réservoirs 66, grandes cuves intégrées à l'infrastructure, sont de préférence enterrés le long de la voie 50, par exemple tous les cent mètres. Pour ne pas affaiblir l'ouvrage, ils sont placés latéralement à l'écart de la voie 50.

La couche de support 41 peut également assurer partiellement ou totalement la fonction de réservoir du système de recirculation de l'eau de pluie. Elle est alors non pas drainée à sa base, mais elle fonctionne avec un raccordement d'exutoire en trop plein.

Avantageusement, le dispositif de collecte comporte un circuit d'écoulement pour collecter l'eau de pluie ruisselant à la surface de la voie lorsque la couche supérieure 45 du sol reconstitué est saturée. Ce circuit comporte des regards 61 (ou encore des grilles avaloir, des trappes drainantes ou l'équivalent) sur le bord de la voie 50.

De préférence, un regard 61 est relié par un tuyau 63 à la couche de support 41, pour conduire l'eau de ruissellement directement dans la couche de drainage que constitue la couche de support 41 avant d'être collectée par l'ensemble exutoire 62,64.

Ainsi, le réservoir 66 récupère l'eau d'infiltration et l'eau de ruissellement sur l'emprise de la voie 50.

Le réservoir 66 comprend un trop-plein permettant l'évacuation de l'eau stockée lorsque son niveau dépasse un niveau seuil. Par exemple, une surverse gravitaire 67 est prévue sur le réservoir. L'eau est par exemple évacuée vers un égout.

Le système 60 comporte un dispositif d'arrosage 70. Il s'agit de préférence d'un système d'arrosage par submersion propre à déverser, avec un fort débit, un volume d'eau suffisant pour former une lame d'eau de quelques millimètres sur la largeur complète d'une section de la voie 50.

Le dispositif 70 comporte par exemple une pompe de relevage 72 propre à amener l'eau prélevée dans le réservoir 66 dans des buses 76 d'arrosage.

L'eau prélevée par la pompe est avantageusement filtrée par passage à travers un filtre 68.

Le système 60 intègre un dispositif de surveillance 80. Ce système comporte par exemple une sonde 82 fichée dans le sol reconstitué de la voie 50 pour mesurer au moins l'hygrométrie des couches profondes du sol reconstitué 40 retenant une réserve d'eau pour le couvert végétal. Il peut s'agir d'une mesure d'humidité ou du potentiel matriciel.

Le dispositif 80 est propre à déterminer l'état d'assèchement du sol reconstitué en fonction des mesures délivrées par la sonde.

Le dispositif 80 est propre à déterminer si un apport d'eau est requis en tenant compte des besoins physiologiques des végétaux à la période considérée et d'un historique de l'état d'assèchement du sol reconstitué. Avantageusement, la surveillance réalisée par le dispositif 80 s'effectue en fonction des capacités de jaunissement temporaire et de reverdissement des végétaux (notamment du gazon) sans risque de dépérissement.

Si un apport d'eau est requis, le dispositif 80 est propre à déterminer la quantité d'eau à apporter et à actionner le dispositif d'arrosage 70 de manière adaptée. Par exemple, le dispositif de surveillance 80 pilote, par une liaison sans fil du type Wi-Fi, un actionneur 74 d'ouverture de la pompe 72 du dispositif d'arrosage 70.

La solution agrégeant les deux améliorations présentées ci-dessus, organisation des couches constitutives du sol reconstitué, d'une part, et système de recirculation de l'eau de pluie d'autre part, permet de gérer les eaux pluviales d'occurrence régulière ou exceptionnelle. Elle limite les risques de saturation du sol reconstitué, tout en répondant au besoin de stabilité mécanique des voies. Elle optimise les conditions d'aération et d'alimentation en eau nécessaires au développement des racines des végétaux. Les racines peuvent ainsi se développer dans les couches du substrat fertile, voire dans la couche de drainage. Un bon enracinement est obtenu augmentant la tenue du couvert végétal. Les végétaux conservent donc leur aspect vert et se trouvent dans des conditions optimales de croissance. Le recyclage de l'eau de pluie permet une valorisation des eaux pluviales et une réduction de la consommation de l'eau potable pour le maintien du couvert végétal. En cas de saturation, l'eau de ruissellement est récupérée, notamment par passage à travers la couche de support drainante. Cela participe au lissage dans le temps de la quantité d'eau de pluie que doit gérer l'infrastructure urbaine de collecte d'eau en cas de forte pluie.

Les deux améliorations présentées ci-dessus ont été décrites dans le cadre d'une voie ferroviaire simple, mais sont propres à s'appliquer à une pluralité de voies ferroviaires, par exemple en parallèle les unes des autres.

## Revendications

1. Voie ferroviaire végétalisée (50) comprenant un élément de support de voie ferrée (10), un sol reconstitué (40) et un couvert végétal (55), l'élément de support de voie ferrée étant enfoui, au moins partiellement, dans le sol reconstitué et le couvert végétal recouvrant le sol reconstitué, le sol reconstitué (40) présentant une perméabilité de surface et comportant :
- une couche de support (41) sur la surface supérieure (42) de laquelle repose l'élément de support de voie (10), la couche de support (41) constituant une couche de drainage qui présente une perméabilité (K1) étant supérieure à la perméabilité de surface ;
- au moins un substrat fertile (43, 45) en contact avec la couche de support (41) autour de l'élément de support de voie ferrée (10), **caractérisée en ce que** le substrat fertile (43, 45) présente une perméabilité qui diminue en fonction de la profondeur depuis la perméabilité de surface et comporte au moins une couche inférieure (43) et une couche supérieure (45), la couche supérieure recevant le couvert végétal (55), une perméabilité (K3) de la couche supérieure (45) étant égale à la perméabilité de surface et une perméabilité (K2) de la couche inférieure (43) étant inférieure à la perméabilité de surface ; et
**en ce que** le sol reconstitué (40) comporte un film de protection à l'interface entre la couche de support (41) et le support de voie ferrée (10) ou la couche inférieure (43).

2. Voie ferroviaire végétalisée (50) selon la revendication 1, dans laquelle une épaisseur (e3) de la couche supérieure (45) représente entre 20 et 80 % d'une épaisseur du substrat fertile.

3. Voie ferroviaire végétalisée selon la revendication 1 ou la revendication 2, dans laquelle la couche supérieure (45) présente une porosité totale (p1) majoritairement du type macroporosité et la couche inférieure (43) présente une porosité totale (p2) majoritairement du type microporosité.

4. Voie ferroviaire végétalisée selon l'une quelconque des revendications 1 à 3, dans laquelle une porosité totale (p3) de la couche supérieure (45) est supérieure à 50% du volume de la couche supérieure (45) et une porosité totale de la couche inférieure (43) est comprise entre 35% et 70% du volume de la couche inférieure (43).

5. Voie ferroviaire végétalisée selon l'une quelconque des revendications 1 à 4, dans laquelle une capacité d'aération de la couche supérieure (45), pour un potentiel matriciel entre 0 et environ 2,5, est égale ou supérieure à 10% du volume de la couche supérieure, de préférence supérieure à 20% du volume de la couche supérieure, et une capacité d'aération de la couche inférieure (43), pour un potentiel matriciel entre 0 et environ 2,5, est égale ou supérieure à 5% du volume de la couche inférieure, de préférence supérieure à 10%, de préférence encore comprise entre 15 et 20% du volume de la couche inférieure.

6. Voie ferroviaire végétalisée selon l'une quelconque des revendications 1 à 5, dans laquelle une capacité de disponibilité en eau de la couche supérieure (45) est, pour un potentiel matriciel entre 2,5 et 4,2, supérieure à 5% du volume de la couche supérieure, et une capacité de disponibilité en eau de la couche inférieure (43), pour un potentiel matriciel entre environ 2,5 et 4,2, est supérieure à 5% du volume de la couche inférieure , de préférence supérieure à 10%, de préférence encore comprise entre 15 et 20% du volume de la couche inférieure.

7. Voie ferroviaire végétalisée (50) selon l'une quelconque des revendications 1 à 6, dans laquelle la couche de support (41) est minérale, de préférence constituée d'un béton poreux, et le substrat fertile (43, 45) est en un matériau organo-minéral, de préférence une terre limoneuse.

8. Voie ferroviaire végétalisée selon l'une quelconque des revendications 1 à 7, comportant en outre un système (60) de recirculation de l'eau de pluie comportant un dispositif (61 à 64) de collecte de l'eau de pluie tombant sur la voie ferroviaire végétalisée (50) et un dispositif d'arrosage (70) du couvert végétal (50) avec l'eau de pluie collectée.

9. Voie ferroviaire végétalisée selon l'une quelconque des revendications 1 à 8, dans lequel l'élément de support de voie (10) comporte des longrines droite et gauche (11, 12) de support de files de rails, délimitant entre elles un évidement (16) autorisant une continuité du sol reconstitué entre le substrat fertile (43, 45) et la couche de support (41).

## Patentansprüche

1. Begrünter Schienenweg (50), der ein Schienenweg-Trägerelement (10), einen geschütteten Boden (40) und eine pflanzliche Bedeckung (55) umfasst, wobei das Schienenweg-Trägerelement zumindest teilweise in dem geschütteten Boden vergraben ist und die pflanzliche Bedeckung den geschütteten Boden bedeckt, wobei der geschüttete Boden (40) eine Oberflächenpermeabilität aufweist und umfasst:
- eine Trägerschicht (41), auf deren oberer Fläche (42) das Schienenweg-Trägerelement (10) ruht, wobei die Trägerschicht (41) eine Drainageschicht bildet, die eine Permeabilität (K1) größer als die Oberflächenpermeabilität aufweist,
- mindestens ein fruchtbares Substrat (43, 45) in Kontakt mit der Trägerschicht (41) um das Schienenweg-Trägerelement (10) herum, **dadurch gekennzeichnet, dass** das fruchtbare Substrat (43, 45) eine Permeabilität aufweist, die sich von der Oberflächenpermeabilität ab abhängig von der Tiefe verringert und mindestens eine untere Schicht (43) und eine obere Schicht (45) aufweist, wobei die obere Schicht die pflanzliche Bedeckung (55) aufnimmt und eine Permeabilität (K3) der oberen Schicht (45) gleich der Oberflächenpermeabilität ist und eine Permeabilität (K2) der unteren Schicht (43) kleiner als die Oberflächenpermeabilität ist; und
dass der geschüttete Boden (40) eine Schutzschicht an der Grenzfläche zwischen der Trägerschicht (41) und dem Schienenweg-Träger (10) oder der unteren Schicht (43) aufweist.

2. Begrünter Schienenweg (50) nach Anspruch 1, bei dem eine Dicke (e3) der oberen Schicht (45) zwischen 20 und 80% einer Dicke des fruchtbaren Substrats darstellt.

3. Begrünter Schienenweg nach Anspruch 1 oder Anspruch 2, bei dem die obere Schicht (45) eine Gesamtporosität (p1) hauptsächlich vom Typ Makroporosität aufweist und die untere Schicht (43) eine Gesamtporosität (p2) hauptsächlich vom Typ Mikroporosität aufweist.

4. Begrünter Schienenweg nach einem der Ansprüche 1 bis 3, bei dem eine Gesamtporosität (p3) der oberen Schicht (45) größer als 50 % des Volumens der oberen Schicht (45) beträgt und eine Gesamtporosität der unteren Schicht (43) zwischen 35% und 70% des Volumens der unteren Schicht (43) liegt.

5. Begrünter Schienenweg nach einem beliebigen der Ansprüche 1 bis 4, bei dem eine Belüftungskapazität der oberen Schicht (45) für ein Matrixpotential zwischen 0 und ungefähr 2,5 gleich oder größer als 10% des Volumens der oberen Schicht, vorzugsweise größer als 20% des Volumens der oberen Schicht beträgt und eine Belüftungskapazität der unteren Schicht (43) für eine ein Matrixpotential zwischen 0 und ungefähr 2,5 gleich oder größer als 5% des Volumens der unteren Schicht, vorzugsweise größer als 10% ist, noch bevorzugter zwischen 15 und 20% der unteren Schicht liegt.

6. Begrünter Schienenweg nach einem beliebigen der Ansprüche 1 bis 5, bei dem eine Verfügbarkeit an Wasser der oberen Schicht (45) für ein Matrixpotential zwischen 2,5 und 4,2 größer ist als 5% des Volumens der oberen Schicht und eine Verfügbarkeit an Wasser der unteren Schicht (43) für ein Matrixpotential zwischen ungefähr 2,5 und 4,2 größer als 5% des Volumens der unteren Schicht, vorzugsweise größer als 10% beträgt, noch bevorzugter zwischen 15 und 20% des Volumens der unteren Schicht liegt.

7. Begrünter Schienenweg (50) nach einem beliebigen der Ansprüche 1 bis 6, bei dem die Trägerschicht (41) mineralisch ist, vorzugsweise aus einem porösen Beton gebildet ist, und das fruchtbare Substrat (43, 45) ein organisch-mineralisches Material, vorzugsweise eine lehmige Erde ist.

8. Begrünter Schienenweg nach einem beliebigen der Ansprüche 1 bis 7, außerdem ein Rezirkulationssystem (60) für Regenwasser aufweisend, das eine Vorrichtung (61 bis 64) zum Sammeln des Regenwassers, das auf den begrünten Schienenweg (50) fällt, und eine Bewässerungsvorrichtung (70) der pflanzlichen Bedeckung (55) mit dem gesammelten Regenwasser aufweist.

9. Begrünter Schienenweg nach einem beliebigen der Ansprüche 1 bis 8, bei dem das Schienenweg-Trägerelement (10) rechte und linke Schwellen (11, 12) zum Abstützen von Schienensträngen aufweist, die zwischen sich eine Aussparung (16) begrenzen, die eine Durchgängigkeit des geschütteten Bodens zwischen dem fruchtbaren Substrat (43, 45) und der Trägerschicht (41) gestattet.

## Claims

1. Vegetalised railway track (50) comprising a track support element (10), a reconstituted soil (40) and a vegetal cover (55), the track support element being buried, at least partially, in the reconstituted soil and the vegetal cover covering the reconstituted soil, the reconstituted soil (40) having a surface permeability and comprising:
- a support layer (41) on the top surface (42) of which the track support element (10) rests, the support layer (41) constituting a drainage layer which has a permeability (K1) being greater than the surface permeability;
- at least one fertile substrate (43, 45) in contact with the support layer (41) around the track support element (10), **characterised in that** the fertile substrate (43, 45) has a permeability which decreases as a function of the depth from the surface permeability and comprises at least a bottom layer (43) and a top layer (45), the top layer receiving the vegetal cover (55), a permeability (K3) of the top layer (45) being equal to the surface permeability and a permeability (K2) of the bottom layer (43) being lower than the surface permeability; and
**in that** the reconstituted soil (40) comprises a protective film at the interface between the support layer (41) and the track support (10) or the bottom layer (43).

2. Vegetalised railway track (50) according to claim 1, wherein a thickness (e3) of the top layer (45) represents between 20 and 80% of a thickness of the fertile substrate.

3. Vegetalised railway track according to claim 1 or claim 2, wherein the top layer (45) has a total porosity (p1) which is mainly of the macroporosity type and the bottom layer (43) has a total porosity (p2) which is mainly of the microporosity type.

4. Vegetalised railway track according to any one of claims 1 to 3, wherein a total porosity (p3) of the top layer (45) is greater than 50% of the volume of the top layer (45) and a total porosity of the bottom layer (43) is between 35% and 70% of the volume of the bottom layer (43).

5. Vegetalised railway track according to any one of claims 1 to 4, wherein an aeration capacity of the top layer (45), for a matrix potential between 0 and approximately 2.5, is equal to or greater than 10% of the volume of the top layer, preferably greater than 20% of the volume of the top layer, and an aeration capacity of the bottom layer (43), for a matrix potential between 0 and approximately 2.5, is equal to or greater than 5% of the volume of the bottom layer, preferably greater than 10%, yet more preferably between 15 and 20%, of the volume of the bottom layer.

6. Vegetalised railway track according to any one of claims 1 to 5, wherein a water availability capacity of the top layer (45) is, for a matrix potential between 2.5 and 4.2, greater than 5% of the volume of the top layer, and a water availability capacity of the bottom layer (43), for a matrix potential between approximately 2.5 and 4.2, is greater than 5% of the volume of the bottom layer, preferably greater than 10%, yet more preferably between 15 and 20%, of the volume of the bottom layer.

7. Vegetalised railway track (50) according to any one of claims 1 to 6, wherein the support layer (41) is mineral, preferably composed of a porous concrete, and the fertile substrate (43, 45) is made of an organo-mineral material, preferably a loamy soil.

8. Vegetalised railway track according to any one of claims 1 to 7, further comprising a system (60) for recirculating rainwater, comprising a device (61 to 64) for collecting the rainwater that falls on the vegetalised railway track (50) and a watering device (70) for watering the vegetal cover (50) with the collected rainwater.

9. Vegetalised railway track according to any one of claims 1 to 8, wherein the track support element (10) comprises left and right longitudinal beams (11, 12) for supporting stretches of rails, which longitudinal beams delimit between them a recess (16) permitting continuity of the reconstituted soil between the fertile substrate (43, 45) and the support layer (41).
